# EUROPEAN PATENT SPECIFICATION

(11) **EP 3 973 827 B1**
(45) Date of publication and mention of the grant of the patent: **12.07.2023**
(21) Application number: 20198975.3
(22) Date of filing: 29.09.2020
(51) Int. Cl.: A47J 36/08, A47J 36/14, A47G 19/14, B65D 47/08

(54) **OPENING MECHANISM FOR A POURING CAP OF A LID FOR A FOOD RECEPTACLE**
ÖFFNUNGSMECHANISMUS FÜR EINE AUSGUSSKAPPE EINES DECKELS FÜR EINEN LEBENSMITTELBEHÄLTER
MÉCANISME D'OUVERTURE POUR UN CAPUCHON DE VERSEMENT D'UN COUVERCLE D'UN RÉCIPIENT ALIMENTAIRE

(43) Date of publication of application: 30.03.2022
(73) Proprietor: BSH Hausgeräte GmbH, 81739 München (DE)
(72) Inventor: Brecko, Ales, 3000 Celje (SI); Hribersek, Anton, 3330 Mozirje (SI); Kovacec, Bostjan, 1420 Trbovlje (SI); Krivec, Luka, 3331 Nazarje (SI)

(56) References cited:
- US-A1- 2005 211 727
- US-A1- 2011 088 561
- US-A1- 2014 001 208
- US-B2- 7 615 724

## Description

The present invention concerns a lid for a food receptacle, in particular for a jar of a kitchen appliance. The invention further concerns a container comprising a food receptacle and a lid, and a kitchen appliance comprising such container and a base the container can be mounted on.

Known lids for food receptacles may be configured not only to close the respective food receptacle, but also to allow pouring out the food while the lid remains mounted on the food receptacle. To this end, the respective lid may comprise a pouring. To nevertheless facilitate a complete closure, the lid may further include a pouring cap configured to selectively close or release the pouring. Traditionally, the pouring caps of such lids are operated (i.e., opened or closed) by a user pulling or pressing the respective cap by hand.

A known lid is disclosed in US2011/088561.

It is an object of the present invention to provide equipment implementing an alternative technique for operating the pouring cap of a lid for a food receptacle.

The object is achieved by a lid according to claim 1, a container according to claim 8 and a kitchen appliance according to claim 10. Preferred embodiments are disclosed in the dependent claims, the description and the figures.

A lid according to the present invention is configured to serve for closing a food receptacle. Such food receptacle may in particular be a jar of a mechanical or electric kitchen appliance, such as a jar of an electric blender, for instance.

The lid comprises a ring component comprising a pouring and being configured to be positioned on an edge of the food receptacle. The pouring can be selectively closed or released with a swivelling (i.e., pivotable) pouring cap, which is hinged in the ring component so as to form a lever. In a first swivel position relative to the ring component, the pouring cap closes the pouring, and in a second swivel position relative to the ring component, the pouring cap releases the pouring. An elastic element further comprised by the lid urges the pouring cap to its first swivel position. The elastic element may in particular comprise at least one torsion spring and or at least one rubber element, for example.

The lid according to the present invention further comprises a centre component which closes an inner space at least partially surrounded by the ring component or which at least is adapted to close said inner space (when installed appropriately). When (i.e., while) thus closing said inner space, the centre component is rotatable, relative to the ring component, and about a designated axis of rotation (which preferably coincides with a centre axis of said inner space), at least between a first rotational position relative to the ring component and a second rotational position relative to the ring component. The rotation may be possible in one or both rotational direction/s. When in the first rotational position, the centre component releases the pouring cap. As a consequence, unless a user acts on the pouring cap, e.g. with his fingers, the pouring cap may preferably be in its first swivel position, due to the elastic force of the elastic element. By contrast, when the centre component is in its second rotational position relative to the ring component, a radial protrusion comprised by the centre component acts on a radially inner lever arm of the pouring cap, e.g. by pressing on a surface of said lever arm. Thereby, the pouring cap is urged - against the elastic force of the elastic element - into its second swivel position, in which the pouring is released. In the following, said protrusion is also referred to as "opener protrusion".

As is to be noted, in this document, the term "radial" as well as (below) "axial" and "circumferential direction" always relates to the designated axis of rotation of the centre component when closing the inner space at least partially surrounded by the ring component.

The lid according to the present invention thus facilitates operating the pouring cap by rotating the centre component in the ring component. Thereby, an easy and hygienic manipulation is possible, by which the user is kept from touching the pouring and, therewith, possible remainders of the respective food which may adhere to the pouring.

The first and the second rotational position of the centre component (relative to the ring component) may differ from each other by an angle of at least 60°, at least 75° or at least 85° and/or by an angle of at most 120°, at most 105° or at most 95°. That is, a transition of the centre component from the first rotational position to its second rotational position may in particular comprise a rotation about at least 60°, at least 75° or at least 85°, or an/or about at most 20°, at most 105° or at most 95°.

According to advantageous embodiments, the centre component my further be configured to release the pouring cap when the centre component is in a third rotational position relative to the ring component, the third rotational position being different from the first rotational position. In such embodiments, the centre component may be further rotatable at least between the second and the third rotational position.

Additionally or alternatively, the centre component may comprise at least one further radial protrusion which may be configured to act on the radially inner lever arm of the pouring cap when the centre component is in a fourth rotational position relative to the ring component, the fourth rotational position being different from the second rotational position. In such embodiments, the centre component may be further rotatable at least between the first and the fourth rotational position. Due to its function, in the following such protrusion may also be denoted as "opener protrusion".

These embodiments provide a particularly convenient operation of the pouring cap, as the necessity of rotations about large angles is prevented.

Particularly preferred are embodiments wherein the centre component is fully rotatable (about any angle) in both directions.

The centre component may be permanently combined to the ring component.

Alternatively, the centre component may be detachable from the ring component. In such cases, the inner space at least partially surrounded by the ring component may provide an opening for entering food to be treated and/or a respective tool into the receptacle, the opening being is smaller than the opening of the receptacle when the lid is taken therefrom and thus reducing splatters expelled from the receptacle. Particularly preferred are embodiments where such centre component is configured as a measuring cup, which embodiments thus provide a corresponding double function.

Preferably, further to the operability by means of the centre component, the pouring cap may be directly operable, such as by manually acting on the radially inner and/or the radially outer lever arm of the pouring cap. For instance, in embodiments with detachable centre component, the pouring cap can thus be operated also when the centre component is not available.

According to advantageous embodiments, the centre component is removable from the ring component in axial direction when it is in the first rotational position relative to the ring component. In embodiments involving a third rotational position, the centre component may (alternatively or additionally) be removable from the ring component in axial direction when it is in said third rotational position.

Additionally or alternatively, the centre component may preferabl be secured, in axial direction, to the ring component at least when the centre component is in its second rotational position relative to the ring component. Analogously, in embodiments involving a fourth rotational position as described above, the centre component may additionally or alternatively be secured, in axial direction, to the ring component at least when the centre component is in its fourth rotational position relative to the ring component.

In particular, the centre component may comprise at least one an overhang (such as a radially protruding pin and/or rib) configured to retain the centre component in the ring component when the opener protrusion of the centre component acts on the radially inner lever arm. Thereby, the centre component can be stabilised in the inner space at least partially surrounded by the ring component when it acts against the elastic force of the elastic element.

In such embodiments, the ring component may comprise at least one depression configured to receive such overhang at least when the centre component is in its second position. In particular, the depression may comprise a corrugation and/or a groove the overhang may slide along when the centre component is rotated, in the ring component, to the second rotational position. In respecitve embodiments, the same may hold in the fourth rotational position relative to the ring component.

According to advantageous embodiments of the present invention, the centre component comprises at least one bulge protruding radially outwards at a different circumferential position than the opener protrusion. Such bulge may preferably have a smaller axial and/or circumferential extension than the opener protrusion. The bulge may be configured to act (only) temporarily on the radially inner lever arm of the pouring cap when the centre component is being rotated, in the ring component, from its first rotational position to its second rotational position. As a consequence, the pouring cap is sequentially swivelled and caused to snap back to its first swivel position, due to the elastic force of the elastic element. Thereby, a haptic and/or an acoustic signal may be created, which may indicate the user the rotational position of the centre component.

The position of the bulge in circumferential direction may be such that the bulge acts on the radially inner lever arm when the centre component is in a further (intermediate) rotational position between the first and the second rotational positions relative to the ring component. In particular, in embodiments in which the circumferential centre component is secured in axial direction when being in its second (and/or fourth) rotational position (relative to the ring component) as described above, the centre component may be further secured to the ring component in each rotational position between the further and the second (fourth) rotational position. In such embodiments, said haptic and/or acoustic signal may thus indicate to the user that the centre component is secured in the ring component and ready for being rotated so as to open the pouring cap.

The opener protrusion's acting on the radially inner lever arm may be due to the opener protrusion sliding on a surface of the radially inner lever arm of pouring cap. According to advantageous embodiments, the radially inner lever arm of the pouring cap comprises a corrugated surface the opener protrusion of the centre element is configured to slide along when the centre component is rotated to its second rotational position relative to the ring component. Thereby, a smooth swivelling of the pouring cap by means of the opener protrusion can be realised.

For fastening the lid on the food receptacle, a lid according to the present invention may further comprise fixation means such as at least one slewing clamp, a thread and/or at least one bayonet means.

A container according to the present invention comprises a food receptacle and a lid according to an embodiment of the present invention. Therein, the lid is adapted to close the food receptacle. In embodiments where the lid comprises fixation means for fastening it to the food receptacle, the food receptacle may comprise at least one respective counter means configured to interact with the fixation means.

The container may comprise at least one tool arranged or arrangeable in the food receptacle, the tool configured to treat a respective food contained by the food receptacle. In particular, such tool may be rotatable. For example, it may comprise a rotatable knife assembly. The container may comprise a mechanical or electrical actuation component (such as an electric motor) for the tool, and/or it may be configured to be mounted on a base comprising such actuation component.

A kitchen appliance according to the present invention comprises a base and a container according to an embodiment of the present invention, wherein the container is configured to be mounted on the base. In particular, the kitchen appliance may comprise an electric blender.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and are not always defined again for each figure.

Shown is schematically in
- Fig. 1a:: a container according to an exemplary embodiment of the present invention in a perspective view, with the pouring cap closing a pouring;
- Fig. 1b:: the container of Figure 1a with the pouring cap releasing the pouring;
- Fig. 2:: a pouring cap, a centre component and an elastic element of a lid according to an exemplary embodiment of the present invention;
- Fig. 3a:: a cross section (along the designated rotation axis of the centre component) of a portion of a container according to an embodiment of the present invention with the pouring cap in its first swivel position; and
- Fig. 3b:: a cross section (along he designated rotation axis of the centre component) of the portion of Figure 3a with the pouring cap in its second swivel position.

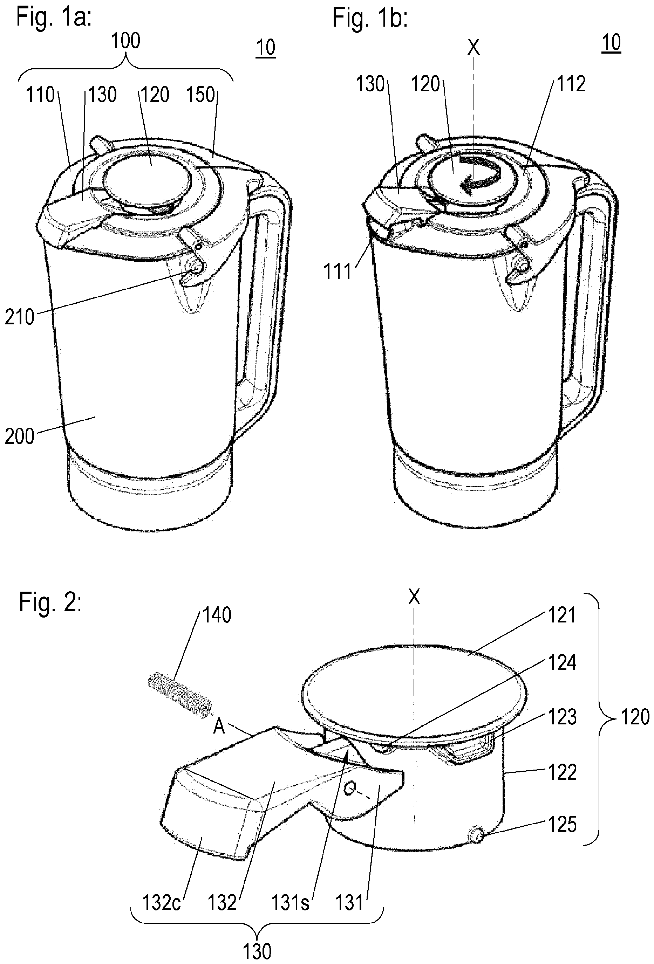

In Figures 1a and 1b, an exemplary embodiment of a container 10 according to the present invention is depicted. The container 10 may in particular include a rotatable tool (not shown) such as a rotatable knife assembly of an electric blender.The container 10 may include a mechanical or electric actuation component for driving such tool (not shown in Figures 1a, 1b), or it may be configured to be mounted on a base and coupled to a mechanical or electric actuation component (such as an electric motor) of such base for driving the tool (not shown in Figures 1a, 1b).

The container 10 comprises a lid 100 according to an embodiment of the present invention, and a food receptacle 200. In the situation shown in Figures 1a, 1b, the lid 100 is positioned on an edge of the receptacle 200 and fastened thereto by means of fixation means 150 (comprised by the lid 100) and corresponding counter means 210 of the receptacle 200. As seen in Figures 1a, 1b, in the example depicted, the fixation means 150 comprise two slewing clamps which are diametrically opposed to each other with regard to the ring component 110 of the lid 100 and which for fixation partially encompass the counter means 210 which form pivotal points for the fixation means 150.

The lid 100 comprises a ring component 110 comprising a pouring 111 facilitating pouring out food contained in the food receptacle 200. The lid 100 further comprises a centre component 120 and a swivelling (i.e., pivotable) pouring cap 130, which is hinged in the ring component 110 so as to form a lever and adapted to selectively release or close the pouring 111 depending on a respective swivel position. In addition, in its interior, the lid 100 comprises an elastic element which, however, in the representation of Figures 1a, 1b is not visible.

In the situations depicted in Figures 1a, 1b, the centre component is closing an inner space surrounded by the ring component 110. Therein, the centre component 120 is rotatable about a designated rotation axis X (coinciding with a centre axis of the inner space surrounded by the ring component 110), so as to effect a swivelling of the pouring cap 130 and, thereby, a releasing or closing of the pouring 111, selectively.

Figure 1a depicts the centre component 120 in a first rotational position relative to the ring component 110, whereas in Figure 1b, the centre component 120 is shown after being rotated from the first rotational position into a second rotational position relative to the ring component 110, as indicated by an arrow.

As is seen Figure 1a, in its first rotational position, the centre component 120 does not act on the pouring cap 130 which, as a consequence, is held in a first swivel position (by means of the elastic element not visible in Figure 1a), thus closing the pouring 111. By contrast, in its second rotational position, the centre component 120 acts on a radially inner lever arm of the pouring cap which thereby is transferred into a second swivel position, as depicted in Figure 1b. In this second position, the pouring cap 130 releases the pouring 111.

Preferably, the centre component 120 is detachable from the ring component 110. In particular, the centre component 120 may be removable from the ring component 110 in axial direction (i.e., along the centre axis X) when the centre component is in the first rotational position, as shown in Figure 1a.

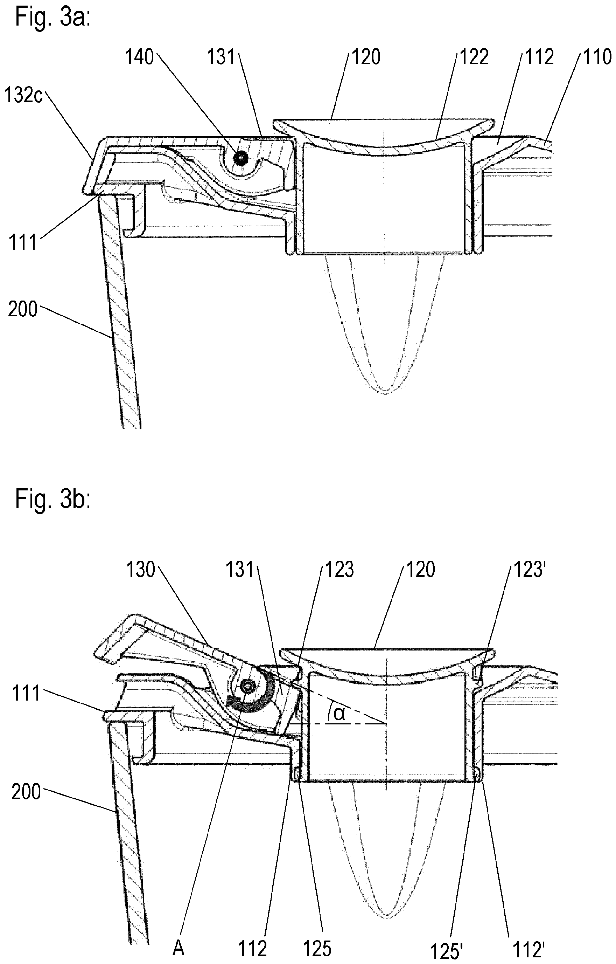

The functioning and details of the mechanism are further explained with regard to Figures 2, 3a and 3b:
Figure 2 depicts the centre component 120, the pouring cap 130 and the elastic element 140 of a lid according to the present invention in a partially exploded view avoiding that the elastic element 140 is hidden by the pouring cap 130.

In a complete (and operable) lid according to the present invention, the pouring cap 130 will be hinged in the ring component (not shown) so as to be pivotable (swivelling) about a swivelling axis A, and the elastic element 140 - which in the present case is a torsion spring - will be combined with the ring component (not shown), so as to urge the pouring cap 130 into the shown first swivel position thereof (in which first swivel position the pouring element is depicted in Figure 2).

The thus hinged pouring cap 130 forms a lever with a radially inner level arm 131 (which thus is facing the designated rotation axis X of the centre element 120, said axis coinciding with a centre axis of the inner space at least partially surrounded by the ring component 110 when the centre element is inserted therein in a designated manner). The pouring cap (hinged so as to form a lever) further comprises a radially outer lever arm 132 comprising a bent region 132.

The bent region 132 of the pouring cap 130 may in particular be configured to close an opening of the pouring 111 when the pouring cap 130 is in its first swivel position. According to particular embodiments, the pouring may comprise a tube portion; in this case said opening may by an end of the tube, the end facing an exterior of the food receptacle when the lid is attached to the food receptacle (in a designated manner). Such embodiment is shown in Figures 3a, 3b.

The centre component 120 depicted in Figures 2, 3a and 3b is configured as a measuring cup. It comprises a cylindrical wall 122 to be positioned, in the inner space at least partially surrounded by the ring component (not shown in Figure 2). The centre component 120 further comprises a circular cover 121 which, when the centre component is turned around to serve as a measuring cup, forms a ground thereof.

The centre component 120 further comprises an opener protrusion 123, a bulge 124 and an overhang 125 each projecting radially outwards (with respect to the axis X) from the cylindrical wall 122. As is depicted in Figure 3b, the exemplary centre component 120 may comprise at least one further opener protrusion 123' and/or at least one further overhang 125' which in the present case are arranged diametrically opposed to the opener protrusion 123 and the overhang 125, respectively. The centre component may further comprise at least one further bulge (not shown in the figures); at least one such further bulge may be arranged at a position which is rotated by +/-90° (about the axis X) as compared to a position of the bulge 124, and/or at least one such further bulge may be positioned diametrically opposed to the bulge 124 (i.e., at a position which is rotated by 180° (about the axis X) as compared to a position of the bulge 124.

Such further elements (opener protrusion, overhang, bulge, respectively) may preferably have the same function as the opener protrusion 123, overhang 125, bulge 124, respectively, at another rotational position of the centre component, such as at a third and/or fourth rotational position (relative to the ring component) and/or a further (intermediate) rotational position. Thereby, a user can be relieved from having to carry out large rotation angles to achieve the respective effects.

The opener protrusion 123 is configured to act on the radially inner lever arm 131 of the pouring cap 130 when the centre component 120 has been rotated about the axis X from the first rotational position shown in Figures 2 and 3a to a second rotational position (relative to the ring component 110 which is not depicted in Figure 2) as seen in Figure 3b. By acting on the radially inner lever arm 131, the opener protrusion 123 causes the pouring cap 130 to swivel with a swivelling angle α about a swivelling axis A (see Figure 3b), thus transferring the pouring cap 130 into the second swivel position thereof, in which second swivel position the pouring cap 130 releases the pouring 111. A corrugated surface 131s (seen in Figure 2) of the radially inner lever arm 131 provides for a smooth transfer when the centre component 120 is rotated, entailing that the opener protrusion 123 is sliding along the corrugated surface 131s.

As is seen in the cross section of Figure 3b, at least in the second rotational position of the centre component 120, overhangs 125, 125' retain the centre component 120 in the ring component 110 by interacting with a respective counter structure 112, 112' of the ring component 110, thus securing the centre component 120 within the ring component 110 in axial direction. In the exemplary embodiment depicted in Figure 3b, the counter structures 112, 112' comprise a corrugation or groove to improve a sealing effect between the centre component and the ring component 110.

When the centre component 120 is being rotated from its first rotational position (seen in Figures 2 and 3a) to its second rotational position (seen in Figure 3b), in a further (intermediate) rotational position (between the first and the second rotational positions relative to the ring component) of the centre component 120, the bulge 124 (visible in Figure 2) temporarily acts on the radially inner lever arm 131 of the pouring cap 130. Thereby, the pouring cap 130 is caused to temporarily swivel out of its first swivel position, and to snap back to it due to the elastic force of the elastic element 140. Thereby, a haptic and/or acoustic signal may be created. Preferably, the centre component 120 is secured to the ring component 110 in each rotational position between said further (intermediate) rotational position and the second rotational position (not shown in the figures). Said haptic and/or acoustic signal may thus indicate to the user that the centre component 120 is secured in the ring component 110 - and ready for being further rotated so as to open the pouring cap 130, if desired.

Disclosed is a lid 100 for a food receptacle 200, the lid comprising a ring component 110 with a pouring 111, a swivelling pouring cap 130 hinged in the ring component 110 so as to form a lever, and an elastic element 140 urging the pouring cap 130 towards a first swivel position. The lid 100 further comprises a centre component 120 closing or at least configured to close an inner space at least partially surrounded by the ring component 110 while being rotatable about a designated rotation axis X. By rotation of the centre component, the pouring cap 130 is swivelled so as to selectively close or release the pouring 111.

Further disclosed are a container 10 comprising a food receptacle 200 and a lid 100, and a kitchen appliance comprising a base and such container.

### Reference signs

- 10: container

- 100: lid

- 110: ring component
- 111: pouring
- 112, 112': counter structure for overhang 125, 125'

- 120: centre component
- 121: cover of centre component
- 122: cylindrical wall of centre component
- 123, 123': opener protrusion
- 124: bulge
- 125, 125': overhang

- 130: pouring cap
- 131: radially inner lever arm
- 131s: corrugated surface of the radially inner lever arm

- 140: elastic element

- 150: fixation means

- 200: food receptacle
- 210: counter means for fixation means 150

- α: swivelling angle
- A: swivelling axis
- X: designated rotation axis of the centre component when closing the inner space at least partially surrounded by the ring component 110

## Claims

1. Lid (100) for a food receptacle (200), in particular for a jar of a kitchen appliance, the lid comprising
- a ring component (110) to be positioned on an edge of the receptacle (200), the ring component comprising a pouring (111),
- a swivelling pouring cap (130) hinged in the ring component (110) so as to form a lever, wherein in a first swivel position relative to the ring component (110), the pouring cap closes the pouring (111) and in a second swivel position relative to the ring component, the pouring cap releases the pouring (111);
- an elastic element (140) urging the pouring cap (130) towards its first swivel position; and
**characterised in that** it further comprises
- a centre component (120) closing or configured to close an inner space at least partially surrounded by the ring component (110) while being rotatable, around a designated rotation axis (X), between a first rotational position relative to the ring component, in which position the centre component (120) releases the pouring cap (130), and a second rotational position relative to the ring component, in which position an opener protrusion (123) of the centre component (120) acts on a radially inner lever arm (131) of the pouring cap, thereby urging the pouring cap (130) against the elastic force of the elastic element into the second swivel position.

2. Lid according to claim 1, wherein the centre component (120) is configured as a measuring cup.

3. Lid according to one of claims 1 or 2, wherein in its first rotational position relative to the ring component, the centre component (120) is removable from the ring component (110) in axial direction.

4. Lid according to one of the preceding claims, wherein in its second rotational position relative to the ring component, the centre component (120) is secured, in axial direction, to the ring component (110).

5. Lid according to one of the preceding claims, wherein the centre component (120) further comprises at least one bulge (124) protruding radially outwards at a different circumferential position than the opener protrusion (123), the bulge (124) being configured to temporarily act on the radially inner lever arm (131) of the pouring cap (130) when the centre component (120) is being rotated, in the ring component (110), from its first rotational position to its second rotational position relative to the ring component (110).

6. Lid according to one of the preceding claims, wherein the radially inner lever arm (131) of the pouring cap (130) comprises a corrugated surface (131s) the protrusion (123) of the centre element (120) is configured to slide along when the centre component is rotated to the second rotational position relative to the ring component (110).

7. Lid according to one of the preceding claims, further comprising fixation means (150) for fastening the lid (100) on the food receptacle (200).

8. Container (10) comprising a food receptacle (200) and a lid (100) according to one of the preceding claims, the lid (100) adapted to close the food receptacle (200).

9. Container according to claim 8, further comprising a tool for treating food in the food receptacle (200).

10. Kitchen appliance comprising a base and an associated container (10) according to claim 9.

## Patentansprüche

1. Deckel (100) für einen Lebensmittelbehälter (200), insbesondere ein Gefäß eines Küchengeräts, der Folgendes umfasst:
- ein ringförmiges Teil (110), das an einem Rand des Behälters (200) angeordnet werden soll, wobei das ringförmige Teil einen Ausguss (111) umfasst,
- eine verschwenkbare Ausgusskappe (130), die so in dem ringförmigen Teil (110) angelenkt ist, dass ein Hebel entsteht, wobei die Ausgusskappe in einer ersten Verschwenkposition in Bezug auf das ringförmige Teil (110) den Ausguss (111) schließt und in einer zweiten Verschwenkposition in Bezug auf das ringförmige Teil den Ausguss (111) freigibt,
- ein federndes Element (140), das die Ausgusskappe (130) in ihre erste Verschwenkposition drückt, und
**dadurch gekennzeichnet, dass** er ferner Folgendes umfasst:
- ein mittleres Teil (120), das einen Innenraum schließt oder so konfiguriert ist, dass es einen Innenraum schließt, und zumindest teilweise von dem ringförmigen Teil (110) umgeben ist und dabei um eine vorgegebene Rotationsachse (X) zwischen einer ersten Drehposition in Bezug auf das ringförmige Teil, in der das mittlere Teil (120) die Ausgusskappe (130) freigibt, und einer zweiten Drehposition in Bezug auf das ringförmige Teil drehbar ist, in der ein Öffnungsvorsprung (123) des mittleren Teils (120) auf einen radial innenliegenden Hebelarm (131) der Ausgusskappe einwirkt und diese dadurch gegen die Federkraft des federnden Elements in die zweite Verschwenkposition drückt.

2. Deckel nach Anspruch 1, wobei das mittlere Teil (120) als Messbecher gestaltet ist.

3. Deckel nach Anspruch 1 oder 2, wobei sich das mittlere Teil (120) in seiner ersten Drehposition in Bezug auf das ringförmige Teil in axialer Richtung aus dem ringförmigen Teil (110) nehmen lässt.

4. Deckel nach einem der vorhergehenden Ansprüche, wobei das mittlere Teil (120) in seiner zweiten Drehposition in Bezug auf das ringförmige Teil in axialer Richtung an dem ringförmigen Teil (110) fixiert ist.

5. Deckel nach einem der vorhergehenden Ansprüche, wobei das mittlere Teil (120) ferner mindestens einen Wulst (124) umfasst, der an einer anderen Umfangsposition als der Öffnungsvorsprung (123) radial nach außen vorsteht, wobei der Wulst (124) so konfiguriert ist, dass er vorübergehend auf den radial innenliegenden Hebelarm (131) der Ausgusskappe (130) einwirkt, wenn das mittlere Teil (120) in dem ringförmigen Teil (110) aus seiner ersten in seine zweite Drehposition in Bezug auf das ringförmige Teil (110) gedreht wird.

6. Deckel nach einem der vorhergehenden Ansprüche, wobei der radial innenliegende Hebelarm (131) der Ausgusskappe (130) eine gewellte Fläche (131s) umfasst, an der der Vorsprung (123) des mittleren Elements (120) entlanggleitet, wenn das mittlere Teil in die zweite Drehposition in Bezug auf das ringförmige Teil (110) gedreht wird.

7. Deckel nach einem der vorhergehenden Ansprüche, der ferner Befestigungsmittel (150) zum Befestigen des Deckels (100) an dem Lebensmittelbehälter (200) umfasst.

8. Behältnis (10), das einen Lebensmittelbehälter (200) und einen Deckel (100) nach einem der vorhergehenden Ansprüche umfasst, wobei der Deckel (100) so ausgelegt ist, dass er den Lebensmittelbehälter (200) schließt.

9. Behältnis nach Anspruch 8, das ferner ein Werkzeug zum Verarbeiten von Lebensmitteln in dem Lebensmittelbehälter (200) umfasst.

10. Küchengerät mit einem Sockel und einem zugehörigen Behältnis (10) nach Anspruch 9.

## Revendications

1. Couvercle (100) pour un récipient alimentaire (200), en particulier pour un bocal d'un appareil de cuisine, le couvercle comprenant
- un composant annulaire (110) destiné à être positionné sur un bord du récipient (200), le composant annulaire comprenant un bec verseur (111),
- un capuchon de bec verseur pivotant (130) articulé dans le composant annulaire (110) de sorte à former un levier, dans lequel dans une première position de pivotement par rapport au composant annulaire (110), le capuchon de bec verseur ferme le bec verseur (111) et dans une deuxième position de pivotement par rapport au composant annulaire, le capuchon de bec verseur libère le bec verseur (111) ;
- un élément élastique (140) pressant le capuchon de bec verseur (130) vers sa première position de pivotement ; et
**caractérisé en ce qu'**il comprend en outre
- un composant central (120) fermant ou configuré pour fermer un espace interne au moins en partie entouré par le composant annulaire (110) tout en étant rotatif, autour d'un axe de rotation désigné (X), entre une première position de rotation par rapport au composant annulaire, position dans laquelle le composant central (120) libère le capuchon de bec verseur (130), et une deuxième position de rotation par rapport au composant annulaire, position dans laquelle une saillie d'ouverture (123) du composant central (120) agit sur un bras de levier radialement interne (131) du capuchon de bec verseur, pressant de ce fait le capuchon de bec verseur (130) contre la force élastique de l'élément élastique jusque dans la deuxième position de pivotement.

2. Couvercle selon la revendication 1, dans lequel le composant central (120) est configuré en tant que tasse de mesure.

3. Couvercle selon l'une des revendications 1 ou 2, dans lequel dans sa première position de rotation par rapport au composant annulaire, le composant central (120) est amovible du composant annulaire (110) en direction axiale.

4. Couvercle selon l'une des revendications précédentes, dans lequel dans sa deuxième position de rotation par rapport au composant annulaire, le composant central (120) est solidement fixé, en direction axiale, sur le composant annulaire (110).

5. Couvercle selon l'une des revendications précédentes, dans lequel le composant central (120) comprend en outre au moins un renflement (124) faisant saillie radialement vers l'extérieur en une position circonférentielle différente de celle de la saillie d'ouverture (123), le renflement (124) étant configuré pour agir temporairement sur le bras de levier radialement interne (131) du capuchon de bec verseur (130) lorsque le composant central (120) est tourné, dans le composant annulaire (110), depuis sa première position de rotation jusqu'à sa deuxième position de rotation par rapport au composant annulaire (110).

6. Couvercle selon l'une des revendications précédentes, dans lequel le bras de levier radialement interne (131) du capuchon de bec verseur (130) présente une surface ondulée (131s) le long de laquelle la saillie (123) de l'élément central (120) est configurée pour coulisser lorsque le composant central est tourné jusqu'à la deuxième position de rotation par rapport au composant annulaire (110).

7. Couvercle selon l'une des revendications précédentes, comprenant en outre des moyens de fixation (150) pour bloquer le couvercle (100) sur le récipient alimentaire (200).

8. Contenant (10) comprenant un récipient alimentaire (200) et un couvercle (100) selon l'une des revendications précédentes, le couvercle (100) étant adapté à fermer le récipient alimentaire (200).

9. Contenant selon la revendication 8, comprenant en outre un outil pour traiter de la nourriture dans le récipient alimentaire (200).

10. Appareil de cuisine comprenant une base et un contenant associé (10) selon la revendication 9.
